# EUROPEAN PATENT SPECIFICATION

(11) **EP 4 418 354 B1**
(45) Date of publication and mention of the grant of the patent: **18.11.2026**
(21) Application number: 23807920.6
(22) Date of filing: 18.05.2023
(51) Int. Cl.: H01M 4/04, H01M 4/38, H01M 4/134, H01M 4/1395, H01M 10/0525

(54) **METHOD FOR MANUFACTURING ELECTRODE FOR LITHIUM SECONDARY BATTERY**
VERFAHREN ZUR HERSTELLUNG EINER ELEKTRODE FÜR EINE LITHIUMSEKUNDÄRBATTERIE
PROCÉDÉ DE FABRICATION D'ÉLECTRODE POUR BATTERIE SECONDAIRE AU LITHIUM

(30) Priority: 19.05.2022 KR 20220061177
(43) Date of publication of application: 21.08.2024
(73) Proprietor: LG Energy Solution, Ltd., Seoul 07335 (KR)
(72) Inventor: JEON, Seoyoung, Daejeon 34122 (KR); LEE, Ilha, Daejeon 34122 (KR)
(74) Representative: Hoffmann Eitle
(86) International application number: PCT/KR2023/006745
(87) International publication number: WO 2023/224401

(56) References cited:
- EP-A1- 3 754 756
- EP-A1- 3 764 436
- KR-A- 20190 106 151
- KR-A- 20210 029 459
- KR-A- 20210 029 459
- KR-A- 20210 095 504
- KR-A- 20220 061 641
- KR-B1- 102 283 684
- US-B1- 6 761 744

## Description

### [Technical Field]

This application claims priority to and the benefit of Korean Patent Application No. 10-2022-0061177 filed in the Korean Intellectual Property Office on May 19, 2022.

The present application relates to a method of manufacturing an electrode for a lithium secondary battery.

### [Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte solution, and a separator. The negative electrode includes a negative electrode active material for intercalating and deintercalating lithium ions to and from the positive electrode, and silicon-based particles having a high discharge capacity may be used as the negative electrode active material.

In general, a carbon material such as graphite is used for a negative electrode of a lithium secondary battery, but the theoretical capacity density of carbon is 372 mAh/g (833 mAh/cm³). Therefore, in order to improve the energy density of the negative electrode, silicon (Si), tin (Sn), and oxides and alloys thereof, which are alloyed with lithium, are considered as negative electrode materials. Among them, silicon-based materials have attracted attention due to their low cost and high capacity (4200 mAh/g).

However, when a silicon-based negative electrode active material is used, a problem arises in that the initial irreversible capacity is large. In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

KR 2021 0095504 A discloses a method for manufacturing a negative electrode, including the steps of: (a) preparing a negative electrode roll on which a negative electrode structure including a negative electrode current collector and a negative electrode active material layer formed on at least one surface of the negative electrode current collector is wound; (b) bonding a pre-lithiated structure including a polymer film and a lithium metal layer formed on the polymer film to the negative electrode structure so that the lithium metal layer and the negative electrode active material layer can face each other while unwinding the negative electrode structure from the negative electrode roll; (c) pressing the negative electrode structure to which the pre-lithiated structure is bonded; and (d) winding the negative electrode structure to which the pre-lithiated structure is bonded on a recovery roll and storing the same after the pressing step.

KR 2021 0029459 A discloses a method for manufacturing a negative electrode for a lithium secondary battery, comprising the following steps of: manufacturing a lithium layer on a protective layer of a transfer film including a substrate and a protective layer to manufacture a lithium transfer film; and preparing a negative electrode having a negative electrode active material layer formed on a current collector, and bonding and rolling the lithium transfer film to face the lithium layer on the negative electrode active material layer, wherein the protective layer includes an acrylic resin and, in the transferring step, the lithium layer and the protective layer are transferred on the negative electrode active material layer.

In order to solve the above problem, known is a pre-lithiation method of a silicon negative electrode including a silicon-based negative electrode active material. As the pre-lithiation method, known methods include a method of manufacturing an electrode after lithiation by a physicochemical method such as electrolytic plating, lithium metal transfer, and lithium metal deposition, a method of electrochemically pre-lithiating a negative electrode, and the like.

In a lithium metal transfer process, it is difficult to transfer lithium metal safely and easily, and lithium is not transferred from a transfer laminate, or even if lithium metal is transferred, the highly reactive lithium metal immediately starts reacting with a negative electrode active material, thereby causing problems such as particle breakage on a surface of the negative electrode active material layer.

In order to control reactivity and transferability of lithium metal, a release layer is used when transferring lithium metal, and is transferred together when transferring lithium metal. However, after the pre-lithiation process, the adhesion of the release layer increases due to temperature rise and change in pressure condition, making it difficult to remove the release layer. In this case, the release layer serves as a resistor in the battery, resulting in an increase in resistance.

Therefore, in pre-lithiating the electrode, it is necessary to research a method capable of uniformly pre-lithiating an electrode active material layer in a more safe and efficient manner without an increase in resistance in a battery.

### [Detailed Description of the Invention]

### [Technical Problem]

It was confirmed through researches that the lithium metal transfer process includes a process of transferring lithium metal from the transfer laminate to the top of the electrode active material layer in the pre-lithiation process and it is possible to increase the transferability of lithium metal and to facilitate the removal of the release layer after completion of pre-lithiation by adjusting an amount of heat generation per time of the electrode active material layer during pre-lithiation, and thus, the present application is intended to provide a method of manufacturing an electrode for a lithium secondary battery.

### [Technical Solution]

An exemplary embodiment of the present specification provides a method of manufacturing an electrode for a lithium secondary battery (200) including: forming an electrode current collector layer (40) and an electrode active material layer (30)) on one surface or both surfaces of the electrode current collector layer (40); and transferring lithium metal (20) onto the electrode active material layer (30), in which the transferring of lithium metal (20) includes preparing a transfer laminate (100) in which a base layer (10), a release layer (35) and lithium metal (20) are sequentially stacked, laminating the transfer laminate (100) onto the electrode active material layer (30) such that a surface of the lithium metal (20) opposite to a surface in contact with the release layer (35) comes into contact with a surface of the electrode active material layer (30) opposite to a surface in contact with the electrode current collector layer (40), removing the base layer (10), and removing the release layer (35), and in which the laminating is performed with a pressure of 980.66 kPa (10 kgf/cm²) or higher and 14709,97 kPa (150kgf/cm²) or lower under a temperature condition of 30°C or lower.

### [Advantageous Effects]

In general, the release layer should be necessarily used to easily transfer lithium metal from the transfer laminate to the top of the electrode active material layer. However, if a battery is manufactured with the release layer itself being included in the electrode after pre-lithiation, the resistance of the battery is increased.

Accordingly, the method of manufacturing an electrode for a lithium secondary battery according to the exemplary embodiment of the present invention has the feature of including removing the release layer in the pre-lithiation of the transfer process.

In particular, the method relates to a process in which the release layer can be easily separated from the top of the electrode active material layer by adjusting process conditions in the pre-lithiation process of the electrode active material layer, i.e., a process of easily removing the release layer on top of the pre-lithiated electrode by adjusting a pressure, a temperature and an amount of heat generation per time during lithium metal transfer.

The electrode manufactured by the above process does not have a separate layer on the electrode active material layer, such as a release layer, and therefore, has a characteristic in that a resistance does not increase during a battery operation after cell assembly.

### [Brief Description of Drawings]

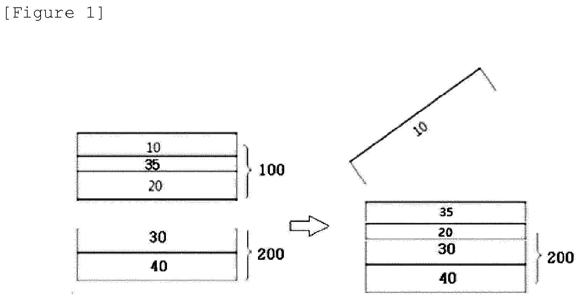

FIG. 1 shows a process of transferring lithium metal to an electrode for a lithium secondary battery according to an exemplary embodiment of the present application.

### [Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mini II available from BEL Japan, Inc. That is, in the present application, the BET specific surface area may refer to the specific surface area measured by the above measurement method.

In the present specification, "Dn" refers to a particle diameter distribution, and refers to a particle diameter at the n% point in the cumulative distribution of the number of particles according to the particle diameter. That is, D50 is a particle diameter (average particle diameter, center particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle diameter distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle diameter distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention.

An exemplary embodiment of the present specification provides a method of manufacturing an electrode for a lithium secondary battery including: forming an electrode current collector layer and an electrode active material layer on one surface or both surfaces of the electrode current collector layer; and transferring lithium metal onto the electrode active material layer, in which the transferring of lithium metal includes preparing a transfer laminate in which a base layer, a release layer and lithium metal are sequentially stacked, laminating the transfer laminate onto the electrode active material layer such that a surface of the lithium metal opposite to a surface in contact with the release layer comes into contact with a surface of the electrode active material layer opposite to a surface in contact with the electrode current collector layer, removing the base layer, and removing the release layer, and in which the laminating is performed with a pressure of 980.66 kPa (10 kgf/cm²) or higher and 14709,97 kPa (150kgf/cm²) or lower under a temperature condition of 30°C or lower.

In an exemplary embodiment of the present application, the electrode may be a negative electrode or a positive electrode.

FIG. 1 shows a process of transferring lithium metal to an electrode for a lithium secondary battery according to an exemplary embodiment of the present application. Specifically, processes of laminating a transfer laminate 100, in which a base layer 10, a release layer 35 and a lithium metal 20 are sequentially stacked, onto an electrode 200 for a lithium secondary battery formed by an electrode current collector layer 40 and an electrode active material layer 30, and then removing the base layer 10 of the transfer laminate 100 can be seen.

Hereinafter, specific details of the method of manufacturing an electrode for a lithium secondary battery of the present invention will be described.

The method of manufacturing an electrode for a lithium secondary battery according to an exemplary embodiment of the present application may include a step of forming an electrode current collector layer and an electrode active material layer on one surface or both surfaces of the electrode current collector layer.

In an exemplary embodiment of the present application, there is provided the method of manufacturing an electrode for a lithium secondary battery in which the step of forming the electrode current collector layer and the electrode active material layer on one surface or both surfaces of the electrode current collector layer includes a step of coating an electrode slurry including an electrode active material layer composition on one surface or both surfaces of the electrode current collector layer, and in which the electrode active material layer composition includes one or more selected from the group consisting of an electrode active material, an electrode conductive material, and an electrode binder.

In this case, there is provided the pre-lithiation method of an electrode for a lithium secondary battery in which the electrode active material includes a silicon-based active material, and the silicon-based active material includes one or more selected from the group consisting of SiOx (x=0), SiOx (0<x<2), SiC, and a Si alloy.

In an exemplary embodiment of the present application, the electrode may be a negative electrode, and hereinafter, the method of manufacturing a negative electrode for a lithium secondary battery will be described.

The method of manufacturing an electrode for a lithium secondary battery according to an exemplary embodiment of the present application may include a step of forming a negative electrode current collector layer and a negative electrode active material layer on one surface or both surfaces of the negative electrode current collector layer.

In an exemplary embodiment of the present application, the negative electrode current collector layer generally has a thickness of 1 µm to 100 µm. Such negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, or silver, or an aluminum-cadmium alloy may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In an exemplary embodiment of the present application, the negative electrode current collector layer may have a thickness of 1 µm or greater and 100 µm or less, and the negative electrode active material layer may have a thickness of 20 µm or greater and 500 µm or less.

However, the thicknesses may be variously modified depending on a type and use of the negative electrode used, and are not limited thereto.

In an exemplary embodiment of the present application, there is provided the method of manufacturing an electrode for a lithium secondary battery in which the step of forming the negative electrode current collector layer and the negative electrode active material layer on one surface or both surfaces of the negative electrode current collector layer includes a step of coating a negative electrode slurry including a negative electrode active material layer composition on one surface or both surfaces of the negative electrode current collector layer, and in which the negative electrode active material layer composition includes one or more selected from the group consisting of a negative electrode active material, a negative electrode conductive material, and a negative electrode binder.

In an exemplary embodiment of the present application, the negative electrode slurry may include a negative electrode active material layer composition, and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may refer to a content of the negative electrode active material layer composition included in the negative electrode slurry, and may refer to a content of the negative electrode active material composition on the basis of 100 parts by weight of the negative electrode slurry.

When the solid content of the negative electrode slurry satisfies the above range, the viscosity is appropriate during formation of the negative electrode active material layer, so that particle aggregation of the negative electrode active material layer composition is minimized to efficiently form the negative electrode active material layer.

In an exemplary embodiment of the present application, the slurry solvent is not limited thereto as long as it can dissolve the negative electrode active material layer composition, but specifically, distilled water may be used.

A negative electrode according to an exemplary embodiment of the present application may be formed by coating and drying the negative electrode slurry on the negative electrode current collector layer.

Through the drying step, the slurry solvent in the negative electrode slurry may be dried.

In an exemplary embodiment of the present application, the negative electrode active material layer composition may include one or more selected from the group consisting of a negative electrode active material, a negative electrode conductive material, and a negative electrode binder.

In an exemplary embodiment of the present application, a silicon-based active material may be used as the negative electrode active material, or a negative electrode including both a silicon-based active material and a carbon-based active material may be used. In this case, a lithium secondary battery having further improved overall performance, such as cycle life characteristics, can be manufactured.

In an exemplary embodiment of the present application, the silicon-based active material may include one or more selected from the group consisting of SiOx (x=0), SiOx (0<x<2), SiC, and a Si alloy.

In an exemplary embodiment of the present application, the silicon-based active material may include one or more selected from the group consisting of SiOx (x=0) and SiOx (0<x< 2), and may include the SiOx (x=0) in an amount of 70 parts by weight or more on the basis of 100 parts by weight of the silicon-based active material.

In another exemplary embodiment, SiOx (x=0) may be included in amount of 70 parts by weight or more, preferably 80 parts by weight or more, and more preferably 90 parts by weight or more, and 100 parts by weight or less, preferably 99 parts by weight or less, and more preferably 95 parts by weight or less on the basis of 100 parts by weight of the silicon-based active material.

In an exemplary embodiment of the present application, for the silicon-based active material, pure silicon (Si) may be particularly used as the silicon-based active material. The use of pure silicon (Si) as the silicon-based active material may mean that, on the basis of 100 parts by weight of the total silicon-based active material as described above, pure Si particles (SiOx (x=0)) not bonded to other particles or elements are included within the above range.

In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

In the present invention, in order to solve the above problems, the negative electrode of the lithium secondary battery is pre-lithiated to solve the initial irreversible capacity problem. Specifically, in the pre-lithiation process, during the lithium transfer process, lithium metal is easily transferred from a transfer laminate, production of by-products is suppressed so that lithium in the negative electrode active material layer can be uniformly pre-lithiated, and an increase in resistance of a manufactured cell is prevented.

An average particle diameter (D50) of the silicon-based active material of the present invention may be 1 µm to 10 µm, specifically 3 µm to 8 µm, and more specifically 3.5 µm to 7 µm. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. In the meantime, when the average particle diameter satisfies the above range, excessively large silicon particles are excluded, so that a surface of the negative electrode is formed smooth. Accordingly, a current density nonuniformity phenomenon during charging and discharging can be prevented.

In an exemplary embodiment of the present application, the silicon-based active material generally has a characteristic BET surface area. The BET surface area of the silicon-based active material is preferably 0.01 to 150.0 m²/g, more preferably 0.1 to 100.0 m²/g, particularly preferably 0.2 to 80.0 m²/g, and most preferably 0.2 to 18.0 m²/g. The BET surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

In an exemplary embodiment of the present application, the silicon-based active material may be included in an amount of 60 parts by weight or more, on the basis of 100 parts by weight of the negative electrode active material layer composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less on the basis of 100 parts by weight of the negative electrode active material layer composition.

The negative electrode active material layer composition according to the present application includes both a negative electrode conductive material and a negative electrode binder capable of controlling the volume expansion rate during charging and discharging even when the silicon-based active material having a significantly high capacity is used within the above range. Accordingly, even when the silicon-based active material is included within the above range, the negative electrode active material layer composition does not degrade performance of the negative electrode and has excellent output characteristics in charging and discharging.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity (circularity) is determined by Equation A below, in which A is an area and P is a boundary line. [Equation A] $4 πA / {P}^{2}$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery. Therefore, a type of the negative electrode conductive material that is used together with the silicon-based active material is important.

In an exemplary embodiment of the present application, the negative electrode conductive material may include one or more selected from the group consisting of a particulate conductive material, a planar conductive material and a linear conductive material.

In an exemplary embodiment of the present application, the particulate conductive material refers to a conductive material that may be used so as to improve conductivity of the negative electrode and has conductivity without causing a chemical change. Specifically, the particulate conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the particulate conductive material may have a BET specific surface area of 40 m²/g or greater and 70 m²/g or less, preferably 45 m²/g or greater and 65 m²/g or less, and more preferably 50 m²/g or greater and 60 m²/g or less. In an exemplary embodiment of the present application, a particle diameter of the particulate conductive material may be 10 nm to 100 nm, preferably 20 nm to 90 nm, and more preferably 40 nm to 60 nm.

In an exemplary embodiment of the present application, the negative electrode conductive material may include a planar conductive material.

The planar conductive material can serve to improve conductivity by increasing surface contact among silicon particles in the negative electrode, and at the same time, to suppress the disconnection of the conductive path due to the volume expansion, and is used as a concept including as a bulk-type conductive material or a plate-like conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, the average particle diameter (D50) of the planar conductive material may be 2 µm to 7 µm, specifically 3 µm to 6 µm, and more specifically 4 µm to 5 µm. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided a negative electrode active material layer composition in which the planar conductive material has D10 of 0.5 µm or greater and 1.5 µm or less, D50 of 2.5 µm or greater and 3.5 µm or less and D90 of 7.0 µm or greater and 15.0 µm or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can affect to some extent the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 m²/g or greater.

In another exemplary embodiment, the planar conductive material may have a BET specific surface area of 5 m²/g or greater and 500 m²/g or less, preferably 5 m²/g or greater and 300 m²/g or less, and more preferably 5 m²/g or greater and 250 m²/g or less.

In another exemplary embodiment, the planar conductive material is a planar conductive material with a high specific surface area, and the BET specific surface area may satisfy a range of 50 m²/g or greater and 500 m²/g or less, preferably 80 m²/g or greater and 300 m²/g or less, and more preferably 100 m²/g or greater and 300 m²/g or less.

In another exemplary embodiment, the planar conductive material is a planar conductive material with a low specific surface area, and the BET specific surface area may satisfy a range of 5 m²/g or greater and 40 m²/g or less, preferably 5 m²/g or greater and 30 m²/g or less, and more preferably 5 m²/g or greater and 25 m²/g or less.

Other negative electrode conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the negative electrode conductive material may be included in an amount of 10 parts by weight or more and 40 parts by weight or less, on the basis of 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 15 parts by weight or more and 25 parts by weight or less, on the basis of 100 parts by weight of the negative electrode active material layer composition.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

The negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the particulate conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed and used into a spherical or particulate shape so as to facilitate storage and release of lithium ions.

On the other hand, the planar conductive material that is used as the negative electrode conductive material is a material having a plane or plate-like shape, and may be expressed as plate-like graphite. That is, the planar conductive material is a material that is included so as to maintain a conductive path in the negative electrode active material layer, and means a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high capacity characteristics with respect to storing and releasing lithium, and serves to store and release all lithium ions transferred from the positive electrode.

On the other hand, in the present application, the use of a carbon-based active material as an active material means that the carbon-based active material is processed into a particulate or spherical shape and used as a material for storing or releasing lithium.

That is, in an exemplary embodiment of the present application, artificial graphite or natural graphite, which is a carbon-based active material, may have a BET specific surface area that satisfies a range of 0.1 m²/g or greater and 4.5 m²/g or less. In addition, plate-like graphite, which is a planar conductive material, has a planar shape, and a BET specific surface area thereof may be 5 m²/g or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The binder according to the exemplary embodiment of the present application serves to hold the negative electrode active material and the negative electrode conductive material in order to prevent distortion and structural deformation of the negative electrode structure when the volume of the silicon-based active material expands and relaxes. When such roles are satisfied, all of the general negative electrode binders can be applied. Specifically, an aqueous binder may be used, and more specifically, a PAM-based binder or an SBR binder may be used.

In an exemplary embodiment of the present application, the negative electrode binder may be included in an amount of 30 parts by weight or less, preferably 25 parts by weight or less, more preferably 20 parts by weight or less, and 1 part by weight or more, and preferably 3 parts by weight or more, on the basis of 100 parts by weight of the negative electrode active material layer composition.

In an exemplary embodiment of the present application, the electrode may be a positive electrode, and hereinafter, the method of manufacturing a positive electrode for a lithium secondary battery will be described. In this case, the same description as the above-described method of manufacturing a negative electrode for a lithium secondary battery may be applied, except the positive electrode.

The method of manufacturing an electrode for a lithium secondary battery according to an exemplary embodiment of the present application may include a step of forming a positive electrode current collector layer and a positive electrode active material layer on one surface or both surfaces of the positive electrode current collector layer.

In an exemplary embodiment of the present application, the positive electrode current collector layer is not particularly limited as long as it has conductivity without causing a chemical change in a battery. For example, stainless steel, aluminum, nickel, titanium, fired carbon, aluminum or stainless steel each surface-treated with carbon, nickel, titanium, or silver may be used. In addition, the positive electrode current collector layer may typically have a thickness of 3 to 500 µm, and a surface of the positive electrode current collector layer may be formed with microscopic irregularities to enhance an adhesive force of the positive electrode active material. For example, the positive electrode current collector layer may be used in various forms such as a film, a sheet, a foil, a net, a porous body, a foamed body, and a non-woven fabric body.

The thickness of the positive electrode current collector layer may be variously modified depending on a type and a use of the positive electrode used, and is not limited thereto.

In an exemplary embodiment of the present application, there is provided the method of manufacturing an electrode for a lithium secondary battery in which the step of forming the positive electrode current collector layer and the positive electrode active material layer on one surface or both surfaces of the positive electrode current collector layer includes a step of coating a positive electrode slurry including a positive electrode active material layer composition on one surface or both surfaces of the positive electrode current collector layer, and in which the positive electrode active material layer composition includes one or more selected from the group consisting of a positive electrode active material, a positive electrode conductive material, and a positive electrode binder.

In an exemplary embodiment of the present application, the above description of the negative electrode slurry may be similarly applied to the positive electrode slurry, except the positive electrode.

In an exemplary embodiment of the present application, the positive electrode active material layer composition may include one or more selected from the group consisting of a positive electrode active material, a positive electrode conductive material, and a positive electrode binder.

The positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li_{1+c1}Mn_{2-c1}O₄(0≤c1≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; a Ni-site type lithium nickel oxide represented by chemical formula LiNi_{1-c2}M_{c2}O₂ (where M is at least one selected from the group consisting of Co, Mn, Al, Cu, Fe, Mg, B, and Ga, and satisfies 0.01≤c2≤0.3); a lithium manganese composite oxide represented by chemical formula LiMn_{2-c3}M_{c3}O₂ (where M is at least one selected from the group consisting of Co, Ni, Fe, Cr, Zn and Ta, and satisfies 0.01≤c3≤0.1) or Li₂Mn₃MO₈ (where M is at least one selected from the group consisting of Fe, Co, Ni, Cu and Zn); LiMn₂O₄ in which a part of Li of the chemical formula is substituted with, e.g. an alkaline earth metal ion. The positive electrode may be Li metal.

In this case, the positive electrode conductive material is used to impart conductivity to the electrode, and can be used without particular limitation as long as it does not cause a chemical change and has electronic conductivity in a battery to be configured. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, and any one thereof or a mixture of two or more thereof may be used.

The positive electrode binder serves to improve bonding between particles of the positive electrode active material and adhesion between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and any one thereof or a mixture of two or more thereof may be used.

The above description of the negative electrode active material layer composition may be likewise applied to the contents of the positive electrode active material, the positive electrode conductive material, and the positive electrode binder included in the positive electrode active material layer composition.

An exemplary embodiment of the present application may include a pre-lithiation method of an electrode for a lithium secondary battery including a step of transferring lithium metal onto the electrode active material layer.

In general, the pre-lithiation process chemically or physically pre-lithiates lithium metal on an electrode, and specifically, may be carried out by a lithium metal transfer process, lithium metal powder deposition, an electrochemical process, or a lithium metal deposition process, and the pre-lithiation process according to the present application may include a lithium metal transfer process.

The lithium metal transfer process has a feature capable of transferring highly reactive lithium metal on top of the electrode active material layer more stably. In this case, a process capable of easily transferring lithium metal from the transfer laminate on top of the electrode active material layer is required.

In an exemplary embodiment of the present application, the method may include steps of preparing the transfer laminate described above, laminating the transfer laminate onto the electrode active material layer such that a surface of the lithium metal opposite to a surface in contact with the release layer comes into contact with a surface of the electrode active material layer opposite to a surface in contact with the electrode current collector layer, removing the base layer, and removing the release layer.

In an exemplary embodiment of the present application, the step of preparing the transfer laminate may include a step of coating and stacking a release layer on the base layer, a drying step, and a step of stacking the lithium metal on the release layer, in which the drying step may include performing drying for 5 minutes to 1 hour under a drying temperature condition of 30°C to 90°C.

That is, a range of adhesive force of the release layer is formed within a specific range by adjusting the conditions of the drying step as described above, so that the transfer of lithium metal can be easily performed during pre-lithiation in the transfer process.

In an exemplary embodiment of the present application, any base layer can be used without limitation as long as it has features capable of withstanding process conditions such as high temperature in the step of depositing the lithium metal, and preventing a reverse peeling problem that lithium metal is transferred onto the base layer during a winding process for transferring the deposited lithium metal.

Specifically, in an exemplary embodiment of the present application, the base layer may be one or more selected from the group consisting of polyethylene terephthalate (PET), polyimide (PI), poly(methylmethacrylate)(PMMA), polypropylene, polyethylene and polycarbonate.

In an exemplary embodiment of the present application, a thickness of the base layer may be 1 µm or greater and 300 µm or less, and may satisfy a range of 5 µm or greater and 200 µm or less, and 10 µm or greater and 30 µm or less.

In an exemplary embodiment of the present application, a thickness of the lithium metal may be 1 µm or greater and 10 µm or less, and preferably may satisfy a range of 3 µm or greater and 10 µm or less.

When the thicknesses of the base layer and the lithium metal satisfy the above ranges, the transfer of the lithium metal to the electrode active material layer can occur efficiently and the reverse transfer can be prevented.

In an exemplary embodiment of the present application, the release layer is included on a surface in contact with the base layer and the lithium metal of the transfer laminate, in order to improve the peelability of the lithium metal, to secure transferability to the electrode active material layer and to serve as a protective layer after transfer of the lithium metal.

That is, the base layer may have a release layer formed on at least one surface, or may have release layers formed on both surfaces. The release layer makes it possible to prevent a reverse peeling problem that lithium metal is transferred onto the base layer during a winding process for transferring deposited lithium metal to an electrode, and also makes it possible to easily separate the base layer after transferring lithium metal onto the electrode active material layer.

In an exemplary embodiment of the present application, there is provided the method of manufacturing an electrode for a lithium secondary battery in which the release layer includes one or more selected from the group consisting of polyvinylidene fluoride (PVDF), polyethylene (PE), polypropylene (PP), polyacrylic acid (PAA), and polyester.

In an exemplary embodiment of the present application, there is provided the method of manufacturing an electrode for a lithium secondary battery in which a thickness of the release layer is 0.1 µm or greater and 2 µm or less.

When the thickness of the release layer satisfies the above range, lithium metal can be easily transferred from the transfer laminate to the electrode active material layer, and after pre-lithiation, when removing the release layer from the top of the electrode active material layer, the release layer can be easily removed without disconnection or tearing.

In an exemplary embodiment of the present application, the deposition method for depositing the lithium metal on the base layer having the release layer formed thereon may be selected from evaporation deposition, chemical vapor deposition (CVD) and physical vapor deposition, but is not limited thereto, and various deposition methods that are used in the art may be used.

In an exemplary embodiment of the present application, a physical vapor deposition method may be used as a deposition method for depositing the lithium metal on the base layer having the release layer formed thereon.

In this case, a lamination process may be performed by roll pressing the electrode for a lithium secondary battery on which the transfer laminate is laminated by applying a load of 490.33 kPa (5 kgf/cm²) to 49033.25 kPa (500 kgf/cm²). Thereafter, a process of removing the base layer is included, and upon removal, the release layer according to the present application is included, so problems such as reverse transfer of lithium metal do not occur.

In an exemplary embodiment of the present application, the release layer may be formed by a coating method. For example, the coating method may be a method selected from the group consisting of dip coating, spray coating, spin coating, die coating, gravure coating, micro-gravure coating, comma coating, and roll coating, but is not limited thereto. That is, various coating methods that can be used to form a coating layer in the art can be used.

In an exemplary embodiment of the present application, there is provided a step of laminating the transfer laminate onto the electrode active material layer such that a surface of the lithium metal opposite to a surface in contact with the release layer comes into contact with a surface of the electrode active material layer opposite to a surface in contact with the current collector layer, and in this case, the lamination step may be performed with a pressure of 980.66 kPa (10 kgf/cm²) or higher and 14709,97 kPa (150kgf/cm²) or lower under a temperature condition of 30°C or lower.

After the lamination step, pre-lithiation of the highly reactive lithium metal and the electrode active material layer may proceed.

In another exemplary embodiment, the lamination step may be performed under a temperature condition of 30°C or lower, preferably 25°C or lower, and 10°C or higher, preferably 15°C or higher.

That is, as described above, the lamination is performed under conditions in which heat generated in the electrode can be easily released, and when the temperature condition range is satisfied, a reaction rate of pre-lithiation during the lamination is suitable, and accordingly, heat is not accumulated, so that it is possible to form a state in which it is easy to remove the release layer later.

In an exemplary embodiment of the present application, the lamination step may be performed with a pressure of 980.66 kPa (10 kgf/cm²) or higher and 14709,97 kPa (150kgf/cm²) or lower.

In another exemplary embodiment, the lamination step may be performed with a pressure satisfying a range of 14709,97 kPa (150 kgf/cm²) or lower, preferably 9806.65 kPa (100 kgf/cm²) or lower, and more preferably 4903.33 kPa (50 kgf/cm²) or lower, and 980.66 kPa (10 kgf/cm²) or higher.

Satisfying the above pressure range in the lamination step as described above corresponds to a pressure condition suitable for transferring lithium metal and can prevent detachment of an electrode surface part. In addition, when the above pressure and temperature conditions are satisfied, the release layer can be easily removed later, and accordingly, an increase in resistance when assembling a cell can be prevented.

Specifically, if the lamination step is performed with a pressure exceeding 14709,97 kPa (150 kgf/cm²), the adhesive force of the release layer to lithium metal increases, making it difficult to remove the release layer. When the release layer is forcibly removed, there is a problem in that the detachment of the electrode may occur. In addition, if the lamination step is performed with a pressure less than 980.66 kPa (10 kgf/cm²), transfer of lithium metal to the electrode active material layer may not be performed well.

In an exemplary embodiment of the present application, there is provided the method of manufacturing an electrode for a lithium secondary battery in which the step of transferring the lithium metal includes a step of pre-lithiating the electrode active material layer by laminating the transfer laminate onto the electrode active material layer, and in which in the step of pre-lithiating the electrode active material layer, the electrode active material layer is pre-lithiated within 30 minutes to 24 hours after transferring the lithium metal.

There is provided the method of manufacturing an electrode for a lithium secondary battery in which when pre-lithiating the electrode active material layer, the electrode active material layer generates heat for 30 seconds or longer and 3 minutes or shorter with an amount of heat generation of 5°C/minute and then a temperature is lowered.

There is provided a method of manufacturing an electrode for a lithium secondary battery in which in the step of pre-lithiating the electrode active material layer, the electrode active material layer is pre-lithiated within 30 minutes to 24 hours under conditions of 25°C and 1 atm.

The pre-lithiation step is a step of setting a condition for diffusing lithium metal into the electrode active material layer, and whether the pre-lithiation is completed can be determined depending on whether lithium on top of the electrode active material layer has completely disappeared.

In an exemplary embodiment of the present application, the activation reaction time may be 30 minutes to 48 hours, and preferably 1 hour to 2 hours.

In an exemplary embodiment of the present application, the step of transferring the lithium metal includes a step of removing the base layer.

In the transfer process of lithium metal of the related art, there is a problem in that it is difficult to peel off the base layer in the progression of pre-lithiation after laminating the transfer laminate. Accordingly, the pre-lithiation progresses without the base layer being removed, and the heat generated during pre-lithiation is blocked by the base layer and is not thus dissipated, resulting in formation of by-products on the surface during pre-lithiation of lithium metal and polymer crosslinking of the release layer. As a result, it is not easy to remove the release layer.

However, by adjusting the pressure and temperature in the lamination step, and the amount of heat generation per hour in the pre-lithiation process to appropriate ranges, the base layer can be easily peeled off after laminating the transfer laminate, and therefore, polymer crosslinking of the release layer does not occur, making it easy to remove the release layer.

In an exemplary embodiment of the present application, the step of removing the base layer may be performed within one hour after the step of laminating the transfer laminate onto the electrode active material layer, preferably within 30 minutes after the lamination step, and most preferably immediately after the lamination step.

The step of removing the base layer is preferably performed within the time range described above. In particular, if the base layer is removed after one hour from the lamination step, a lot of lithium side reaction products are rapidly generated, and accordingly, the adhesive force between the release layer and the electrode active material layer is increased, making it difficult to remove the release layer.

In an exemplary embodiment of the present application, the step of transferring the lithium metal includes a step of removing the release layer, and specifically, includes a process of removing the release layer on top of the pre-lithiated electrode active material layer after the pre-lithiation proceeds as described above.

In this case, since the process conditions described above are satisfied, polymer crosslinking of the release layer does not occur, and accordingly, removal of the release layer is facilitated. If the conditions described above are not satisfied, the release layer is not removed due to crosslinking of the release layer, and the force required for removal increases, and problems such as detachment of the electrode may occur.

That is, according to the pre-lithiation method of an electrode for a lithium secondary battery of the present application, it is possible to easily peel off the base layer immediately after laminating the transfer laminate by adjusting the process conditions as described above, thereby preventing the generation of by-products during pre-lithiation. Furthermore, it is possible to easily remove the release layer by preventing an increase in adhesive force between the release layer and the pre-lithiated electrode active material layer.

In this case, the release layer 35 used during pre-lithiation may be removed as described above, and accordingly, does not remain on top of the electrode, thereby preventing an unnecessary increase in resistance. That is, the release layer improves transferability, can be used to protect lithium metal before pre-lithiation, and can be removed before injection of the electrolyte solution.

In an exemplary embodiment of the present application, the electrolyte solution may include an organic liquid electrolyte solution, an inorganic liquid electrolyte, a solid polymer electrolyte, a gel-type polymer electrolyte solution, a solid inorganic electrolyte solution, or a molten-type inorganic electrolyte solution that may be used in the manufacturing of the lithium secondary battery, but is not limited thereto.

Specifically, the electrolyte solution may include a non-aqueous organic solvent and a metal salt.
As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more species selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅) ₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of, e.g., improving lifetime characteristics of the battery, suppressing a decrease in battery capacity, improving discharge capacity of the battery, in addition to the above-described electrolyte solution components.

An exemplary embodiment of the present application provides a lithium secondary battery including: a positive electrode for a lithium secondary battery; a negative electrode for a lithium secondary battery; a separator provided between the positive electrode and the negative electrode; and an electrolyte, in which at least one of the positive electrode for a lithium secondary battery or the negative electrode for a lithium secondary battery is an electrode for a lithium secondary battery pre-lithiated according to the present application.

An exemplary embodiment of the present invention provides a battery module including the lithium secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

### [Mode for Invention]

Hereinafter, preferred examples will be provided for better understanding of the present invention.

### <Examples>

### <Manufacture of Transfer Laminate>

An acrylate-based polymer release layer capable of improving transfer ability was coated on top of a PET (25 µm) layer as a base layer. Thereafter, lithium metal was deposited in a thickness level of 6 µm on top of the PET base by using a PVD method, so that a transfer laminate was manufactured.

### <Manufacture of Negative Electrode>

Si (average particle diameter (D50): 3.5 µm) serving as a silicon-based active material, Denka black serving as a conductive material, SBR serving as a binder, and CMC serving as a thickener were added to distilled water serving as a solvent for forming a negative electrode slurry in a weight ratio of 80:15.8:3:1.2 to manufacture a negative electrode slurry (solid concentration: 25 wt.%).

As a mixing method, the conductive material, the binder, the thickener, and the water were dispersed at 2500 rpm for 30 minutes by using a homo mixer, and then the active material was added and dispersed therein at 2500 rpm for 30 minutes to manufacture the slurry.

The negative electrode slurry was coated on both surfaces of a copper current collector (thickness: 8 µm) serving as a negative electrode current collector with a loading amount of 85 mg/25 cm², roll-pressed and dried in a vacuum oven at 130°C for 10 hours to form a negative electrode active material layer (thickness: 33 µm), which was prepared as a negative electrode (thickness of negative electrode: 41 µm, porosity of negative electrode: 40.0%).

### Example 1

Then, in order to transfer the transfer laminate to the negative electrode active material layer, the lithium metal of the transfer laminate was placed on top of the negative electrode active material layer, which was then subjected to roll-pressing while applying load and temperature conditions in Table 1 below with an external pressurization condition to join the lithium metal and the negative electrode active material layer. Immediately after lamination, the PET layer of the transfer laminate was removed, and the negative electrode was pre-lithiated.

Conditions for pre-lithiation were as shown in Table 1 below, and after pre-lithiation of the negative electrode, the release layer remaining on the surface of the negative electrode active material layer was removed. The release layer was removed using scotch tape (3M tape).

### Examples 2 and 3

In Example 2, the negative electrode was pre-lithiated in the same manner as in Example 1, except that the external pressurization conditions were slightly higher than in Example 1, and in Example 3, the negative electrode was pre-lithiated in the same manner as in Example 1, except that the lithium metal of Example 1 was deposited at a level of 8 µm on top of the PET base layer.

### Comparative Examples 1 to 4

In Comparative Example 1, the negative electrode was pre-lithiated in the same manner as in Example 1, except that the PET base layer was removed after one hour since the lamination was performed, in Comparative Example 2, the external pressurization condition was set as high as 1.77 × 10⁶ kPa (180 kgf/mm²), the PET base layer was removed immediately after lamination, but the release layer was not removed, in Comparative Example 3, the negative electrode was pre-lithiated in the same manner as in Example 1, except that the external pressurization condition was set as high as 1.77 × 10⁶ kPa (180 kgf/mm²) and the PET base layer was removed after one hour since the lamination was performed, and in Comparative Example 4, the negative electrode was pre-lithiated in the same manner as in Example 1, except that the external pressurization condition was set as low as 49033.25 kPa (5 kgf/mm²).

In this case, the adhesive forces between the release layers and the electrode active material layers in Examples 1 to 3 and Comparative Examples 1 to 4 were as shown in Table 1 below, and the evaluation results after pre-lithiation were shown in Table 2 below.

**[Table 1]**

| | External pressure zation condition in kPa (kgf/mm²) | Lamin ation tempe ratur e(°C) | Lithi um thick ness (µm) | Prelithiati on rate (m/min) | PET removal time after lamination | Adhesive force in N/m (gf/20mm) | Removal of release layer |
|---|---|---|---|---|---|---|---|
| Example 1 | 294199.5 (30) | 25 | 6 | 1 | Immediatel y after | 34.83 (71.03) | ○ |
| Example 2 | 490332.5 50 | 25 | 6 | 1 | Immediatel y after | 35.71 (72.83) | ○ |
| Example 3 | 294199.5 (30) | 25 | 8 | 1 | Immediatel y after | 33.40 (68.11) | ○ |
| Compara tive Example 1 | 294199.5 (30) | 25 | 6 | 1 | One hour later | 51.65 (105.33) | X |
| Compara tive Example 2 | 1.77×10⁶ (180) | 25 | 6 | 1 | Immediatel y after | 40.23 (82.04) | X |
| Compara tive Example 3 | 1.77×10⁶ (180) | 25 | 6 | 1 | One hour later | 58.85 (120.02) | X |
| Compara tive Example 4 | 49033.25 (5) | 25 | 6 | 1 | Immediatel y after | 35.56 (72.53) | ○ |

In Table 1, regarding the adhesive force, a 3M double-sided tape was attached to glass (22 mm width), and then the electrode was cut to 20 mm width and attached thereon. Thereafter, the force at the time of peeling off the sample placed at an angle of 90° at a constant speed was measured with adhesive force measurement equipment. The measurement unit is gf, the width of the sample is 20 mm, and accordingly, the unit is gf/20 mm, which is expressed as N/m. The measurements of the physical properties of Table 2 below were evaluated by manufacturing a bi-cell type battery using the negative electrode manufactured as described above and the positive electrode NCM as a counter electrode. For the electrolyte solution used in this battery, 1M LiPF₆-dissolved ethylene carbonate (EC)/ethyl methyl carbonate (EMC) (=3/7 (volume ratio)) was used.

The bi-cell type battery manufactured above was determined for its capacity by using an electrochemical charger/discharger. The battery was charged at a current density of 1C to 4.2V until 0.05C (vs. Li/Li+) and discharged at 0.5C to 2.5V (vs. Li/Li+). Then, after charging up to 4.2V again, the battery was discharged up to SOC50, and then applied with a 2.5C current pulse for 30 seconds for observing a voltage change. In this case, the resistance was each calculated for each case of 0.1 second, 0.1 to 30 seconds and 0 to 30 seconds as shown in Table 2 below. The results are shown in Table 2 below.

**[Table 2]**

| SOC50 2.5C 30sec pulse | 0 to 0.1 sec | 0.1 to 30 sec | 0 to 30 sec | Number of cycles for which 4.2- 2.5V capacity retention rate 80% was achieved |
|---|---|---|---|---|
| Cell resistance at the time of applying current (initial) | resistance | resistance | resistance | |
| Example 1 | 29.8 | 63.1 | 92.9 | 310 |
| Example 2 | 30.0 | 63.3 | 93.3 | 305 |
| Example 3 | 30.2 | 64.2 | 94.4 | 300 |
| Comparative Example 1 | 35.2 | 69.2 | 104.4 | 240 |
| Comparative Example 2 | 33.3 | 66.7 | 100.0 | 430 |
| Comparative Example 3 | 38.1 | 78.1 | 112.1 | 250 |
| Comparative Example 4 | 28.1 | 62.1 | 92.2 | 200 |

As can be seen in Examples 1 to 3 of Table 1 and Table 2, it could be confirmed that the release layer could be easily separated from the top of the electrode active material layer by adjusting the process conditions in the pre-lithiation process of the electrode active material layer according to the present application. In particular, the release layer was easily removed, so it could be specifically confirmed in Table 2 that the electrode manufactured by the above process does not have a separate layer on top of the electrode active material layer, such as a release layer, and therefore, has a characteristic in that a resistance does not increase during a battery operation after cell assembly.

In the case of Example 3, the thickness of lithium was changed to be thicker than in Examples 1 and 2. The thicker the lithium, the more lithium enters the electrode and secures a space, so the thickness of the electrode becomes thicker, which may be a factor of resistance increase due to side reaction products of lithium not inserted into some active materials. However, as can be seen in Table 2, the release layer was easily removed, and accordingly, it could be confirmed that the resistance increase rate was not high, as compared with Comparative Examples 1 and 2.

In the case of Comparative Example 1, since the PET film was not immediately removed after pre-lithiation, heat was not generated, and accordingly, a lot of lithium side reaction products were rapidly generated. Accordingly, it could be confirmed that the adhesive force between the release layer and the electrode active material layer was increased, and thus the release layer was not removed. In particular, in the case of forcibly removing the release layer, a problem occurred due to the detachment of the electrode, and it could be confirmed that the resistance increased.

In the case of Comparative Example 2, it could be confirmed that since the release layer was not removed, resistance increased during the electrode operation, as compared with Examples 1 to 3, as shown in Table 2.

In the case of Comparative Example 3, the pressure in the lamination step was high, so the adhesive force between the release layer and the electrode active material layer increased, and accordingly, the release layer was not removed. In the case of Comparative Example 4, the pressure in the lamination step was too low, so the pre-lithiation was not performed properly. Accordingly, it could be confirmed that the electrode resistances of Comparative Examples 3 and 4 increased.

In summary, as compared with Comparative Examples 1 to 4, in the case of Examples 1 to 3, in the pre-lithiation process, the certain pressurization conditions of the lamination step were satisfied, so that the release layer was easily removed, and it could be accordingly confirmed that the resistance decreased as shown in Table 2 during the electrode operation from which the release layer was removed.

### <Explanation of Reference Numerals and Symbols>

10: a base layer
20: a lithium metal
30: an electrode active material layer
35: a release layer
40: an electrode current collector layer
100: a transfer laminate
200: an electrode for lithium secondary battery

## Claims

1. A method of manufacturing an electrode for a lithium secondary battery (200), the method comprising:
forming an electrode current collector layer (40) and an electrode active material layer (30) on one surface or both surfaces of the electrode current collector layer (40); and
transferring lithium metal (20) onto the electrode active material layer (30),
wherein the transferring of lithium metal (20) comprises preparing a transfer laminate (100) in which a base layer (10), a release layer (35) and a lithium metal (20) are sequentially stacked, laminating the transfer laminate (100) onto the electrode active material layer (30) such that a surface of the lithium metal (20) opposite to a surface in contact with the release layer (35) comes into contact with a surface of the electrode active material layer (30) opposite to a surface in contact with the electrode current collector layer (40), removing the base layer (10), and removing the release layer(35), and
wherein the laminating is performed with a pressure of 980.66 kPa (10 kgf/cm²) or higher and 14709,97 kPa (150 kgf/cm²) or lower under a temperature condition of 30°C or lower.

2. The method of claim 1, wherein the laminating is performed with a pressure of 980.66 kPa (10 kgf/cm²) or higher and 9806.65 kPa (100 kgf/cm²) or lower under a temperature condition of 30°C or lower.

3. The method of claim 1, wherein the transferring of the lithium metal (20) comprises pre-lithiating the electrode active material layer (30) by laminating the transfer laminate (100) onto the electrode active material layer (30), and
wherein the release layer (35) is removed after the pre-lithiating of the electrode active material layer (30).

4. The method of claim 3, wherein when pre-lithiating the electrode active material layer (30), the electrode active material layer (30) generates heat for 30 seconds or longer and 3 minutes or shorter with an amount of heat generation of 5°C/minute and then a temperature is lowered.

5. The method of claim 1, wherein the removing of the base layer (10) is performed within one hour after the laminating of the transfer laminate (100) onto the electrode active material layer (30).

6. The method of claim 1, wherein the release layer (35) comprises one or more selected from the group consisting of polyvinylidene fluoride (PVDF), polyethylene (PE), polypropylene (PP), polyacrylic acid (PAA), and polyester.

7. The method of claim 1, wherein a thickness of the release layer (35) is 0.1 µm or greater and 2 µm or less.

8. The method of claim 1, wherein a thickness of the base layer (10) is 10 µm or greater and 30 µm or less.

9. The method of claim 1, wherein the forming of the electrode current collector layer (40) and the electrode active material layer (30) on one surface or both surfaces of the electrode current collector layer (40) comprises coating an electrode slurry comprising an electrode active material layer composition on one surface or both surfaces of the electrode current collector layer (40), and
wherein the electrode active material layer composition comprises one or more selected from the group consisting of an electrode active material, an electrode conductive material, and an electrode binder.

10. The method of claim 9, wherein the electrode active material (30) comprises a silicon-based active material, and
wherein the silicon-based active material comprises one or more selected from the group consisting of SiOx (x=0), SiOx (0<x<2), SiC, and a Si alloy.

## Patentansprüche

1. Verfahren zur Herstellung einer Elektrode für eine Lithium-Sekundärbatterie (200), wobei das Verfahren umfasst:
Bilden einer Elektrodenstromkollektorschicht (40) und einer Elektrodenaktivmaterialschicht (30) auf einer Oberfläche oder auf beiden Oberflächen der Elektrodenstromkollektorschicht (40); und
Transferieren von Lithiummetall (20) auf die Elektrodenaktivmaterialschicht (30),
wobei das Transferieren von Lithiummetall (20) umfasst: das Herstellen eines Transferlaminats (100), in dem eine Basisschicht (10), eine Trennschicht (35) und Lithiummetall (20) nacheinander geschichtet sind, das Laminieren des Transferlaminats (100) auf die Elektrodenaktivmaterialschicht (30) derart, dass eine Oberfläche des Lithiummetalls (20), die einer mit der Trennschicht (35) in Kontakt stehenden Oberfläche gegenüberliegt, mit einer Oberfläche der Elektrodenaktivmaterialschicht (30), die einer mit der Elektrodenstromkollektorschicht (40) in Kontakt stehenden Oberfläche gegenüberliegt, in Kontakt kommt, das Entfernen der Basisschicht (10) und das Entfernen der Trennschicht (35), und
wobei das Laminieren bei einem Druck von 980,66 kPa (10 kgf/cm²) oder mehr und 14709,97 kPa (150 kgf/cm²) oder weniger unter einer Temperaturbedingung von 30 °C oder weniger durchgeführt wird.

2. Verfahren gemäß Anspruch 1, wobei das Laminieren bei einem Druck von 980,66 kPa (10 kgf/cm²) oder mehr und 9806,65 kPa (100 kgf/cm²) oder weniger unter einer Temperaturbedingung von 30 °C oder weniger durchgeführt wird.

3. Verfahren gemäß Anspruch 1, wobei das Transferieren des Lithiummetalls (20) Vorlithiieren der Elektrodenaktivmaterialschicht (30) durch Laminieren des Transferlaminats (100) auf die Elektrodenaktivmaterialschicht (30) umfasst, und
wobei die Trennschicht (35) nach dem Vorlithiieren der Elektrodenaktivmaterialschicht (30) entfernt wird.

4. Verfahren gemäß Anspruch 3, wobei beim Vorlithiieren der Elektrodenaktivmaterialschicht (30) die Elektrodenaktivmaterialschicht (30) 30 Sekunden oder länger und 3 Minuten oder kürzer Wärme mit einer Wärmeentwicklungsrate von 5 °C/Minute erzeugt und anschließend die Temperatur gesenkt wird.

5. Verfahren gemäß Anspruch 1, wobei das Entfernen der Basisschicht (10) innerhalb einer Stunde nach dem Laminieren des Transferlaminats (100) auf die Elektrodenaktivmaterialschicht (30) erfolgt.

6. Verfahren gemäß Anspruch 1, wobei die Trennschicht (35) eines oder mehrere umfasst, die ausgewählt sind aus der Gruppe bestehend aus Polyvinylidenfluorid (PVDF), Polyethylen (PE), Polypropylen (PP), Polyacrylsäure (PAA) und Polyester.

7. Verfahren gemäß Anspruch 1, wobei die Dicke der Trennschicht (35) 0,1 µm oder mehr und 2 µm oder weniger beträgt.

8. Verfahren gemäß Anspruch 1, wobei die Dicke der Basisschicht (10) 10 µm oder mehr und 30 µm oder weniger beträgt.

9. Verfahren gemäß Anspruch 1, wobei das Bilden der Elektrodenstromkollektorschicht (40) und der Elektrodenaktivmaterialschicht (30) auf einer Oberfläche oder beiden Oberflächen der Elektrodenstromkollektorschicht (40) das Beschichten einer Elektrodenaufschlämmung, die eine Elektrodenaktivmaterialschichtzusammensetzung umfasst, auf eine Oberfläche oder beide Oberflächen der Elektrodenstromkollektorschicht (40) umfasst, und
wobei die Elektrodenaktivmaterialschichtzusammensetzung eines oder mehrere umfasst, die ausgewählt sind aus der Gruppe bestehend aus einem Elektrodenaktivmaterial, einem Elektrodenleitmaterial und einem Elektrodenbindemittel.

10. Verfahren gemäß Anspruch 9, wobei das Elektrodenaktivmaterial (30) ein Aktivmaterial auf Siliziumbasis umfasst, und
wobei das Aktivmaterial auf Siliziumbasis eines oder mehrere umfasst, die ausgewählt sind aus der Gruppe bestehend aus SiOx (x=0), SiOx (0<x<2), SiC und einer Si-Legierung.

## Revendications

1. Procédé de fabrication d'une électrode pour une batterie (200) secondaire au lithium, le procédé comprenant :
la formation d'une couche (40) de collecteur de courant d'électrode et d'une couche (30) de matériau actif d'électrode sur une surface ou les deux surfaces de la couche (40) de collecteur de courant d'électrode ; et
le transfert de lithium (20) métallique sur la couche (30) de matériau actif d'électrode,
dans lequel le transfert de lithium (20) métallique comprend la préparation d'un stratifié (100) de transfert dans lequel une couche (10) de base, une couche (35) de libération et un lithium (20) métallique sont empilés séquentiellement, la stratification du stratifié (100) de transfert sur la couche (30) de matériau actif d'électrode de sorte que une surface du lithium (20) métallique opposée à une surface en contact avec la couche (35) de libération vient en contact avec une surface de la couche (30) de matériau actif d'électrode opposée à une surface en contact avec la couche (40) de collecteur de courant d'électrode, l'enlèvement de la couche (10) de base, et l'enlèvement de la couche (35) de libération, et
dans lequel la stratification est réalisée avec une pression de 980,66 kPa (10 kgf/cm²) ou plus et 14 709,97 kPa (150 kgf/cm²) ou moins dans une condition de température de 30 °C ou moins.

2. Procédé selon la revendication 1, dans lequel la stratification est réalisée avec une pression de 980,66 kPa (10 kgf/cm²) ou plus et 9 806,65 kPa (100 kgf/cm²) ou moins dans une condition de température de 30 °C ou moins.

3. Procédé selon la revendication 1, dans lequel le transfert du lithium (20) métallique comprend la prélithiation de la couche (30) de matériau actif d'électrode par stratification du stratifié (100) de transfert sur la couche (30) de matériau actif d'électrode, et
dans lequel la couche (35) de libération est enlevée après la prélithiation de la couche (30) de matériau actif d'électrode.

4. Procédé selon la revendication 3, dans lequel, lors de la prélithiation de la couche (30) de matériau actif d'électrode, la couche (30) de matériau actif d'électrode génère de la chaleur pendant 30 s ou plus et 3 min ou moins avec une quantité de génération de chaleur de 5 °C/min, et ensuite une température est abaissée.

5. Procédé selon la revendication 1, dans lequel l'enlèvement de la couche (10) de base est réalisé sous une heure après la stratification du stratifié (100) de transfert sur la couche (30) de matériau actif d'électrode.

6. Procédé selon la revendication 1, dans lequel la couche (35) de libération comprend un ou plusieurs sélectionnés dans le groupe consistant en fluorure de polyvinylidène (PVDF), polyéthylène (PE), polypropylène (PP), acide polyacrylique (PAA), et polyester.

7. Procédé selon la revendication 1, dans lequel une épaisseur de la couche (35) de libération est 0,1 µm ou plus et 2 µm ou moins.

8. Procédé selon la revendication 1, dans lequel une épaisseur de la couche (10) de base est 10 µm ou plus et 30 µm ou moins.

9. Procédé selon la revendication 1, dans lequel la formation de la couche (40) de collecteur de courant d'électrode et de la couche (30) de matériau actif d'électrode sur une surface ou les deux surfaces de la couche (40) de collecteur de courant d'électrode comprend le revêtement, par une suspension d'électrode comprenant une composition de couche de matériau actif d'électrode, d'une surface ou des deux surfaces de la couche (40) de collecteur de courant d'électrode, et
dans lequel la composition de couche de matériau actif d'électrode comprend un ou plusieurs sélectionnés dans le groupe consistant en un matériau actif d'électrode, un matériau conducteur d'électrode, et un liant d'électrode.

10. Procédé selon la revendication 9, dans lequel le matériau (30) actif d'électrode comprend un matériau actif à base de silicium, et
dans lequel le matériau actif à base de silicium comprend un ou plusieurs sélectionnés dans le groupe consistant en SiOx (x = 0), SiOx (0 < x < 2), SiC, et un alliage de Si.
